# EUROPÄISCHE PATENTANMELDUNG

(11) **EP 0 788 908 A2**
(43) Veröffentlichungstag der Anmeldung: **13.08.1997**
(21) Anmeldenummer: 96112910.3
(22) Anmeldetag: 10.08.1996
(51) Int. Cl.: B60H 1/32

(54) **Fahrzeug**

(30) Priorität: 24.08.1995 DE 19531122
(71) Anmelder: MESSER GRIESHEIM GMBH, D-60547 Frankfurt (DE)
(72) Erfinder: Diehl, Werner Konrad, 50937 Köln (DE); Kesten, Martin, Dr., 51503 Rösrath (DE); Kleffmann, Hans-Jürgen, 40789 Monheim-Baumberg (DE); Sprickmann, Stefan, 50968 Köln (DE)

(57) **Zusammenfassung**

Die Erfindung betrifft ein Fahrzeug (1) mit einer Kühleinrichtung (6) zum Kühlen eines Transportraumes (2). Um bei einem Fahrzeug (1) die Schadstoff- und Lärmemissionen zu verringern, weist es einen mit tiefkalt verflüssigtem Gas (Kryokraftstoff) antreibbaren Motor (3) und vorzugsweise mit dem gleichen tiefkalt verflüssigten Gas kühlbaren Transportraum (2) auf.

## Beschreibung

Die Erfindung betrifft ein Fahrzeug nach dem Oberbegriff des Anspruchs 1.

Fahrzeuge dienen dem Transport von Gütern oder Menschen. Aus vielen Untersuchungen ist es bekannt, daß landwirtschaftliche Erzeugnisse, pflanzlicher und tierischer Herkunft, Blumen und Pflanzen, in gekühlten Räumen viel länger in frischem Zustand aufbewahrt werden können. Menschen empfinden gekühlte Räume bei höheren Außentemperaturen als angenehm, was insbesondere die Konzentrationsfähigkeit bei der Fahrzeugbedienung erhöht. Für die Verteilung von Lebensmitteln und verderblichen Gütern werden in großem Umfang Kühlfahrzeuge eingesetzt. Die dafür erforderliche Transportkühlung wird üblicher Weise mit mitgeführten Kühleinrichtungen bewerkstelligt, die über eine autarke Antriebsmaschine verfügen oder vom Fahrzeugmotor mit angetrieben werden.

Eine andere Möglichkeit bietet die Mitführung eines Kühlmittels, wie z. B. flüssiger Stickstoff, das nach Bedarf zur Transportraumkühlung verdampft werden kann. Mit dem Versprühen von flüssigem Stickstoff in den Kühlraum kann bereits nach wenigen Minuten die Kühltemperatur bis auf - 40°C eingestellt werden.

Zur Verteilung dieser verderblichen Güter werden umfangreiche Fahrzeugflotten überwiegend in Ballungsgebieten, aber auch im Überlandverkehr eingesetzt. Die Fahrzeuge und die Kühlenrichtungen werden dabei ausschließlich mit Diesel- oder in geringem Umfang mit Benzinkraftstoffen betrieben. Dabei verursachen diese Fahrzeuge in erheblichen Umfang Schadstoff- und Lärmemissionen.

Der Erfindung liegt die Aufgabe zugrunde, ein Fahrzeug zu schaffen, das mit umweltschonenden, emissionsfreien oder emissionsarmen Kraftstoffen betrieben werden kann und dessen Lärmemission wesentlich geringer ist.

Ausgehend von dem im Oberbegriff des Anspruchs 1 berücksichtigten Stand der Technik ist diese Aufgabe erfindungsgemäß gelöst mit den im kennzeichnenden Teil des Anspruchs 1 angegebenen Merkmalen.

Vorteilhatte Weiterbildungen der Erfindung sind in den Unteransprüchen angegeben.

Das erfindungsgemäße Fahrzeug wird mit einem tiefkalt verflüssigten Gas (Kryokraftstoff), wie flüssigem Wasserstoff oder vorzugsweise flüssigem Erdgas (LNG=Liquified Natural Gas) betrieben. Kryokraftstoffe erzeugen sehr viel weniger Ozon, Kohlenmonoxide, Stickoxide und Kohlenwasserstoffe. Kryokraftstoffe sind aus Gründen der Speichereffizienz auf sehr tiefe Temperaturen abgekühlte Flüssigkeiten, die bei niedrigem Druck in einem hochwertigen kälteisolierten Tank mitgeführt werden und vor ihrem Eintritt in den Motor des Fahrzeugs über Wärmetauscher in die Gasphase überführt werden.

Die Erfindung nutzt die beim Phasenwechsel freiwerdende Kälte zur Transportraumkühlung eines Fracht- oder Personenbeförderungsraumes. Dabei wird der Kryokraftstoff in einem geschlossenen System geführt und dadurch wird vorteilhaft ein direkter Kontakt des Kryokraftstoffes mit dem Transportraum bzw. den im Transportraum befindlichen Gütern oder Personen vermieden.

Als Kraftstoff ist z. B. ein Liter verflüssigtes Erdgas 0,6 Litern Diesel gleichzusetzen. Als Kühlmittel besitzt ein Liter verflüssigtes Erdgas zwischen dem Siedepunkt -161°C und 0°C den gleichen Kälteinhalt von 360 kJ wie 1,1 Liter flüssiger Stickstoff.

Zusätzlich zu der günstigen Schadstoffbilanz sind Erdgasfahrzeuge im Vergleich zu entsprechenden Dieselfahrzeugen lärmarm und erzeugen mehrere dB (A) niedrigere Motorgeräusche.

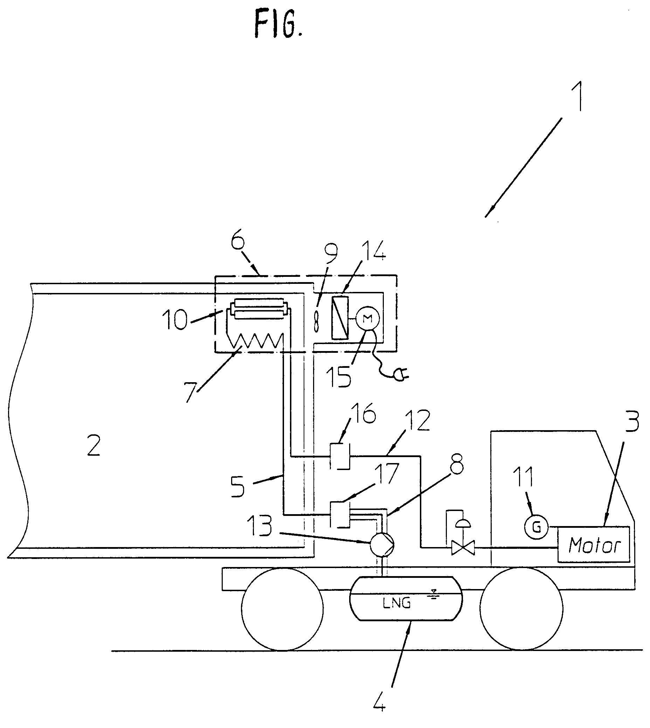

Ein Ausführungsbeispiel der Erfindung ist in der Zeichnung dargestellt und im folgenden näher beschrieben.

In der Zeichnung ist ein Fahrzeug in seiner Gesamtheit mit 1 bezeichnet. Das Fahrzeug weist im wesentlichen einen Transportraum 2 auf, in dem verderbliche Güter aufbewahrt werden, einen Motor 3, mit dem das Fahrzeug 1 angetrieben wird und einen kälteisolierten Tank 4. In dem Tank ist LNG bei ca. -161°C gespeichert. Der Tank ist über Leitung 5 mit einer Kühleinrichtung 6 verbunden, die im wesentlichen aus einem Wärmetauscher 7 besteht, der die Kälteleistung direkt oder indirekt an den Transportraum 2 abgeben kann. Die Leitung 5 ist außerhalb des Transportraumes 2 bei 8 kälteisoliert. Innerhalb des Transportraumes 2 dient die Leitung 5 als Vorverdampfer und weist daher keine Isolierung 8 auf. Die Kühleinrichtung 6 besteht neben dem Wärmetauscher 7 aus einem Ventilator 9 mittels dem das vom Wärmetauscher 7 gekühlte Umgebungsgas im Transportraum 2 gezielt verteilt wird. Der Wärmetauscher 7 ist in geeigneter Weise mit einem Latentkältespeicher 10 verbunden, der im wesentlichen aus Sole-Platten besteht, und in dem die im Wärmetauscher 7 noch nicht vollständig abgegebene Kälteenergie des Kryokraftstoffes gespeichert wird, falls im Transportraum 2 bereits die benötigte Temperatur erreicht ist. Dabei kann der Latentkältespeicher 10 wahlweise vor, nach oder parallel zu dem Wärmetauscher 7 angeordnet werden. Der Ventilator 9 wird wahlweise über eine vom Motor 3 abgenommene Energie, wie Druckluft, Öldruck, Strom u.dgl. oder durch eine sonstige, vorzugsweise mit Kryokraftstoff gespeiste Arbeitsmaschiene betrieben. Bei der letztgenannten Ausführungsform wird die Arbeitsmaschine mit im Tank 4 gespeichertem tiefkalt verflüssigten Gas versorgt.

Die Kühlreinrichtung 6 ist über Leitung 12 mit dem Motor 3 verbunden. Bei Fahrzeugen 1 mit abnehmbaren bzw. von dem Fahrzeug trennbaren Transportraum 2 (Sattelzügen) ist die Kühleinrichtung 6 über eine leckagefreie und bei Betriebsdruck trennbare Kupplung 16 mit dem Motor 3 verbunden.

Im Betrieb wird von dem Tank 4 über eine Pumpe 13 oder über Druckaufbau im Tank 4 Kryokraftstoff, vorzugsweise LNG, zur Kühleinrichtung 6 gefördert. Bei Sattelzügen ist diese Leitung 5 vorzugsweise mit einer leckagefrei bei Betriebstemperatur und - druck trennbaren Kupplung 17 versehen. In dem Wärmetauscher 7 wird das tiefkalt verflüssigte Erdgas (LNG) verdampft. Das den Wärmetauscher 7 umströmende Umgebungsgas wird durch die bei Verdampfung freiwerdende Kühlleistung auf Temperaturen bis -20°C abgekühlt und von dem Ventilator 9 in dem Transportraum verteilt. Das in die Gasphase überführte LNG strömt dann über Leitung 12 zu dem Motor, der mit dem verdampften, gasförmigen Kryokraftstoff angetrieben wird.

Wenn der Kälteeintritt des dem Fahzeugmotor 3 zuzuführenden Kryokraftstoffes den zur Kühlung des Transportraumes 2 erforderlichen Bedarf übersteigt, wird der kalte Kraftstoff durch einen Latentkältespeicher 10 geleitet und sein Kälteinhalt von einem seine Phase ändernden Material aufgenommen. Bei Bedarf wird der Latentkältespeicher 10 von dem zu kühlenden Umgebungsgas durchströmt und gibt dabei seine Kälte wieder ab.

Nach einer weiteren Ausführungsform ist eine Kältemaschine 14 am Transportraum 2 angebracht, deren Kälteleistung direkt oder indirekt mittels Ventilator 9 an den Transportraum abgegeben wird. Der Antrieb dieser Kältemaschine erfolgt nach einer Ausführung durch einen eigenen Verbrennungsmotor mit Kryokraftstoff, der in einem dem Transportraum 2 zugeordneten, nicht näher dargestellten Tank gespeichert ist. Dem Verbrennungsmotor ist dabei ein Wärmetauscher vorgeschaltet. Die Leitung 12 ist bei dieser Ausführung mit dem Motor 3 und dem Tank 4 verbunden. Vorzugsweise erfolgt der Antrieb dieser Kältemaschine 14 aber durch einen Elektromotor 15, der aus dem Generator 11 gespeist wird. Dadurch ist es möglich, bei Elektrobetrieb die Kältemaschine durch das normale E-Netz zu betreiben, falls das Fahrzeug von dem Transportraum 2 abgekoppelt ist. Außerdem kann die Kältemaschine zur Kältespeicherbedarfsdeckung und bei höher geforderten Abkühlungsgeschwindigkeiten eingesetzt werden.

## Patentansprüche

1. Fahrzeug,
gekennzeichnet durch
einen aus tiefkalt verflüssigtem Gas (Kryokraftstoff) antreibbaren Motor (3) und einen, vorzugsweise mit dem gleichen tiefkalt verflüssigten Gas, kühlbaren Transportraum (2).

2. Fahrzeug nach Anspruch 1,
dadurch gekennzeichnet,
daß das tiefkalt verflüssigte Gas in einem kälteisolierten Tank (4) gespeichert ist,
daß der Tank (4) über eine Leitung (5) mit einer Kühleinrichtung (6) verbunden ist, und
daß die Kühleinrichtung (6) mit dem Transportraum (2) verbunden ist.

3. Fahrzeug nach Anspruch 1 oder 2,
dadurch gekennzeichnet,
daß die Kühleinrichtung (6) über eine Leitung (12) mit dem Motor (3) verbunden ist.

4. Fahrzeug nach einem der Ansprüche 1 bis 3,
dadurch gekennzeichnet,
daß die Kühleinrichtung (6) mit einem dem Transportraum (2) zugeordneten Tank verbunden ist und die Leitung (12) mit dem Tank (4) und dem Motor (3) verbunden ist.

5. Fahrzeug nach einem der Ansprüche 1 bis 4,
dadurch gekennzeichnet,
daß die Kühleinrichtung (6) einen von tiefkalt verflüssigten Gas durchströmten Wärmetauscher (7) aufweist.

6. Fahrzeug nach einem der Ansprüche 1 bis 5,
dadurch gekennzeichnet,
daß der Wärmetauscher (7) in dem Transportraum (2) angeordnet ist.

7. Fahrzeug nach einem der Ansprüche 1 bis 6,
dadurch gekennzeichnet,
daß die Kühleinrichtung (6) einen Latentkältespeicher (10) zum Speichern der vom tiefkalt verflüssigten Gas (Kryokraftstoff) abgegebenen Kälte aufweist.

8. Fahrzeug nach einem der Ansprüche 1 bis 7,
dadurch gekennzeichnet,
daß die Kühleinrichtung (6) einen Ventilator (9) zur Verteilung der vom Wärmetauscher (7) oder der vom Latentkältespeicher (10) abgegebenen Kälte im Transportraum (2) aufweist.
